# FASCICULE DE BREVET EUROPEEN

(11) **EP 3 366 938 B1**
(45) Date de publication et mention de la délivrance du brevet: **18.11.2020**
(21) Numéro de dépôt: 18158271.9
(22) Date de dépôt: 23.02.2018
(51) Int. Cl.: F16D 13/52, F16D 21/06, F16D 25/0638

(54) **DISPOSITIF DE RAPPEL ELASTIQUE POUR MECANISME D'EMBRAYAGE HUMIDE ET EMBRAYAGE HUMIDE COMPRENANT UN TEL DISPOSITIF DE RAPPEL ELASTIQUE**
ELASTISCHE RÜCKHOLVORRICHTUNG FÜR NASSKUPPLUNGSMECHANISMUS, UND NASSKUPPLUNG, DIE EINE SOLCHE ELASTISCHE RÜCKHOLVORRICHTUNG UMFASST
ELASTIC RETURN DEVICE FOR A WET CLUTCH MECHANISM AND WET CLUTCH COMPRISING SUCH AN ELASTIC RETURN DEVICE

(30) Priorité: 28.02.2017 FR 1751607
(43) Date de publication de la demande: 29.08.2018
(73) Titulaire: Valeo Embrayages, 80009 Amiens cedex 2 (FR)
(72) Inventeur: CAUMARTIN, Laurent, 80009 Amiens (FR); ARHAB, Rabah, 80009 Amiens (FR); RIBOT, Herve, 80009 Amiens (FR); VUAROQUEAUX, Guillaume, 80009 Amiens (FR); DELPLACE, David, 80009 Amiens (FR)

(56) Documents cités:
- WO-A1-2008/033701
- DE-A1-102008 028 560
- DE-A1-102011 006 027
- DE-A1-102012 023 721
- DE-A1-102014 014 985
- DE-A1-102014 212 701

## Description

### Domaine technique

La présente invention concerne un dispositif de rappel élastique permettant de générer un effort à l'encontre d'un organe permettant d'embrayer ou de débrayer un embrayage d'un mécanisme d'embrayage du type humide et tel qu'utilisé dans le domaine de l'automobile. L'invention concerne aussi un mécanisme d'embrayage comprenant un tel dispositif de rappel élastique ainsi qu'un système de transmission intégrant un tel mécanisme d'embrayage.

### État de la technique antérieure

On connait des mécanismes d'embrayage comprenant un embrayage en rotation autour d'un axe de rotation et un générateur d'effort agencé pour configurer l'embrayage dans une configuration dite débrayée ou embrayée par l'intermédiaire d'une pièce mobile, dite piston, permettant de transmettre vers ledit embrayage l'effort généré au niveau du générateur de force.

De manière connue, un système d'actionnement peut être formé par un générateur d'effort hydraulique comprenant (i) une chambre de commande agencée pour recevoir un fluide pressurisé, (ii) un piston mobile axialement dans la chambre de commande et s'étendant radialement à l'extérieur de la chambre de commande afin d'embrayer ou de débrayer l'embrayage, (iii) une chambre d'équilibrage située à l'opposé de la chambre de commande par rapport au piston, la chambre d'équilibrage comprenant un dispositif de rappel élastique permettant de générer un effort, dit de rappel, à l'encontre du piston.

La chambre de commande est alimentée en un fluide hydraulique pressurisé afin de permettre le déplacement du piston entre une première position correspondant à une configuration embrayée de l'embrayage et une deuxième position correspondant à une configuration débrayée de l'embrayage. Pour ce faire, le fluide hydraulique pressurisé est acheminé vers la chambre de commande par l'intermédiaire de conduits fluidiques dits haute pression.

A contrario, la chambre d'équilibrage est alimentée en un fluide hydraulique dit de refroidissement permettant de lubrifier les composants du mécanisme d'embrayage, et accessoirement la chambre d'équilibrage. Pour ce faire, le fluide hydraulique de refroidissement est acheminé notamment vers la chambre d'équilibrage par l'intermédiaire de conduits fluidiques dits basse pression.

De manière connue, la pression du fluide hydraulique de refroidissement nécessaire à la lubrification du mécanisme d'embrayage est inférieure à celle du fluide hydraulique pressurisé nécessaire pour la génération de l'effort permettant de configurer l'embrayage dans l'une ou l'autre des configurations énumérées précédemment.

En outre, le piston du mécanisme d'embrayage étant situé dans une position intermédiaire entre la chambre d'équilibrage et la chambre de commande, il délimite ainsi les deux chambres du mécanisme d'embrayage. Il est donc nécessaire d'assurer l'étanchéité entre la chambre d'équilibrage et la chambre de commande au niveau du piston afin de garantir d'une part la mise en pression de la chambre de commande, et la lubrification de la chambre d'équilibrage d'autre part, de préférence sans fuite entre les deux chambres.

De manière connue, l'étanchéité entre les deux chambres est réalisée jusqu'à présent par un joint d'étanchéité situé à une extrémité radiale intérieure du piston, le joint d'étanchéité étant pressé contre un support d'embrayage délimitant radialement à l'intérieur à la fois la chambre de commande et la chambre d'équilibrage. Une telle configuration est connue dans le document DE 10 2014 102 515 A1.

Un inconvénient associé à cette configuration est lié à la fabrication complexe du piston, obtenu par exemple par emboutissage et de nombreuses reprises d'usinages afin d'adapter ledit piston aux différents mécanismes d'embrayage. En effet, le piston est une pièce d'ajustement usinée en fonction des autres pièces constitutives du mécanisme d'embrayage et des caractéristiques mécaniques dudit mécanisme d'embrayage. D'une manière générale, le piston est une pièce en tôle emboutie qui applique un effort axial sur un empilage d'éléments de friction afin de transmettre un couple moteur au sein de l'embrayage. Par exemple, le couple à transmettre au niveau de l'embrayage contraint et définit notamment le nombre d'éléments de frictions formant ledit embrayage. Consécutivement, le couple à transmettre au niveau de l'embrayage contraint aussi une extension axiale du piston afin de permettre à ce dernier de coupler ou découpler les éléments de friction entre eux tout en conservant le plus constant possible un encombrement axial et/ou radial du mécanisme d'embrayage, malgré la variabilité des couples transmis. Ainsi, plus le couple à transmettre est important, plus le nombre d'éléments de friction est important, et il convient alors de réduire l'extension axiale du piston afin de tenir compte des variations dimensionnelles de l'embrayage inhérentes à ses caractéristiques mécaniques. Consécutivement, le piston est une pièce dont la géométrie est difficilement standardisable à plusieurs applications de mécanismes d'embrayages et/ou à plusieurs géométries.

L'insertion d'un joint d'étanchéité à une extrémité radiale intérieure du piston d'un mécanisme d'embrayage s'inscrit donc dans un contexte d'industrialisation complexe, et il apparait comme nécessaire de simplifier le procédé de fabrication afin de mieux maitriser l'étanchéité au niveau des chambres de pression et d'équilibrage d'une part, et de réduire les coûts de fabrication d'autre part. Cela est d'autant plus critique lorsque le joint d'étanchéité est obtenu par surmoulage directement sur le piston : cette opération de vulcanisation est généralement réalisée par un sous-traitant externe, ce qui ajoute à la complexité d'industrialisation.

La présente invention a pour objet de répondre au moins en grande partie aux problèmes précédents et de conduire en outre à d'autres avantages en proposant un nouvel dispositif de rappel élastique et un nouveau mécanisme d'embrayage pour résoudre au moins un de ces problèmes.

Un autre but de la présente invention est de proposer un nouvel dispositif de rappel élastique permettant d'assurer l'étanchéité entre une chambre d'équilibrage et une chambre de commande d'un mécanisme d'embrayage lorsque ledit dispositif de rappel élastique est monté sur ledit mécanisme d'embrayage.

Un autre dispositif d'embrayage est décrit par DE 10 2014 014985 A1, il comporte les caractéristiques suivantes: un système d'actionnement avec une chambre de commande et une chambre d'équilibrage, un dispositif de rappel élastique, une première pièce annulaire, une seconde pièce annulaire et une pluralité d'éléments élastiques.

### Exposé de l'invention

Selon un premier exemple, il est montré un dispositif de rappel élastique pour mécanisme d'embrayage humide, ledit dispositif de rappel élastique étant destiné à générer un effort à l'encontre d'un piston mis en mouvement par un système d'actionnement d'un embrayage du mécanisme d'embrayage, ledit dispositif de rappel élastique comprenant :
- une première pièce annulaire destinée à prendre appui contre une face d'appui du mécanisme d'embrayage ;
- une seconde pièce annulaire destinée à prendre appui contre le piston du mécanisme d'embrayage ;
- une pluralité d'éléments élastiques s'étendant entre la première pièce annulaire et la seconde pièce annulaire ;
la seconde pièce annulaire comprenant à son extrémité périphérique intérieure un joint d'étanchéité, et la seconde pièce annulaire étant en appui contre une face du piston orientée axialement en regard de la pluralité d'éléments élastiques.

De manière astucieuse, le dispositif de rappel élastique conforme au premier exemple permet de faciliter les procédés de fabrication du mécanisme d'embrayage sur lequel ledit dispositif de rappel élastique est destiné à être monté. En opposition au contexte industriel décrit pour l'art antérieur, un tel dispositif de rappel élastique forme un module indépendant plus facile à manipuler et à insérer sur le mécanisme d'embrayage que la manipulation et l'insertion du joint d'étanchéité à une extrémité du piston. Le joint d'étanchéité est pré-assemblé sur le module formé par le dispositif de rappel élastique.

Le dispositif de rappel élastique est configuré pour générer un effort s'opposant à une force exercée sur sa seconde pièce annulaire. En particulier, le dispositif de rappel élastique est configuré pour générer un effort sensiblement perpendiculaire à la seconde pièce annulaire lorsqu'une force sensiblement perpendiculaire à ladite seconde pièce annulaire est appliquée au dispositif de rappel élastique. Le positionnement du joint d'étanchéité sur l'extrémité périphérique intérieure de la seconde pièce annulaire assure un positionnement précis du joint d'étanchéité par rapport à la face du piston orientée axialement en regard de la pluralité d'éléments élastiques.

La configuration avantageuse de la seconde pièce annulaire par rapport à la face d'appui du piston permet de faciliter l'assemblage du dispositif de rappel élastique conforme au premier aspect de l'invention sur le mécanisme d'embrayage et d'éviter que, sous l'effet de l'effort généré axialement par la pluralité d'éléments élastique, la seconde pièce annulaire se désolidarise du piston contre lequel elle est appliquée.

Dans son premier aspect, l'invention adresse toute les formes de réalisation d'un tel dispositif de rappel élastique dans un mécanisme d'embrayage. En effet, d'une manière générale mais non limitative, le dispositif de rappel élastique du mécanisme d'embrayage conforme au premier aspect de l'invention est destiné à être logé dans une chambre d'équilibrage d'un système d'actionnement du mécanisme d'embrayage.

Le dispositif de rappel élastique du mécanisme d'embrayage conforme au premier aspect de l'invention peut comprendre avantageusement au moins un des perfectionnements ci-dessous, les caractéristiques techniques formant ces perfectionnements pouvant être prises seules ou en combinaison :
- l'extrémité périphérique intérieure de la seconde pièce annulaire est formée par une partie terminale coudée, de sorte que le joint d'étanchéité s'étend sur la partie terminale coudée de la seconde pièce annulaire du dispositif de rappel élastique. La partie terminale coudée est avantageusement destinée à s'insérer à proximité du piston du mécanisme d'embrayage avec lequel le dispositif de rappel élastique peut collaborer afin d'améliorer l'étanchéité de la chambre de commande dudit mécanisme d'embrayage délimitée par ledit piston. En particulier, mais de manière non limitative, la partie coudée peut être d'extension sensiblement perpendiculaire à la seconde pièce annulaire du dispositif de rappel élastique, et notamment sensiblement parallèle à un axe de symétrie de ladite seconde pièce annulaire ;
- le joint d'étanchéité est emmanché sur l'extrémité périphérique intérieure de la seconde pièce annulaire. Le joint d'étanchéité forme ainsi un chemisage d'au moins l'extrémité périphérique intérieure de la seconde pièce annulaire du dispositif de rappel élastique ;
- le joint d'étanchéité s'étend le long d'un bord d'élongation radiale de la seconde pièce annulaire. En d'autres termes, le joint d'étanchéité s'étend radialement vers l'extérieur au-delà de l'extrémité périphérique intérieure de la seconde pièce annulaire. Cette configuration avantageuse permet de disposer un joint d'étanchéité de plus grande dimension, couvrant à la fois l'extrémité intérieure et le bord d'élongation radiale adjacent de la seconde pièce annulaire du dispositif de rappel élastique, afin d'augmenter la surface dudit joint d'étanchéité pouvant être mise en appui contre une face en regard et d'améliorer aussi sa fixation sur la seconde pièce annulaire dudit dispositif de rappel élastique ;
- le joint d'étanchéité comprend une première garniture et une deuxième garniture, la deuxième garniture s'étendant radialement au-delà de la première garniture sur la seconde pièce annulaire. Chaque garniture du joint d'étanchéité est située contre une face opposée de la seconde pièce annulaire de l'élément élastique, formant ainsi un chemisage extérieur d'une portion de ladite seconde pièce annulaire. En d'autres termes, la portion de la seconde pièce annulaire du dispositif de rappel élastique est située dans le joint d'étanchéité, entre les première et deuxième garnitures ;
- le joint d'étanchéité est vulcanisé afin de le rendre plus élastique. En particulier, le joint d'étanchéité du dispositif de rappel élastique est obtenu par un procédé de surmoulage, par exemple de vulcanisation. Le joint d'étanchéité est collé ou surmoulé ou vulcanisé sur l'extrémité périphérique intérieure de la seconde pièce annulaire ;
- le joint d'étanchéité comprend une lèvre. La lèvre s'étend en saillie par rapport à la première et/ou la deuxième garniture du joint d'étanchéité. La lèvre permet de mieux maitriser l'appui du joint d'étanchéité contre une face en regard de ladite lèvre. La lèvre permet aussi d'améliorer l'étanchéité lorsqu'il existe un mouvement relatif entre le joint d'étanchéité et la face en regard, notamment du mécanisme d'embrayage, contre laquelle il est en appui. La lèvre s'étend axialement dans une direction opposée à la première pièce annulaire, avantageusement au-delà de la seconde pièce annulaire ;
- le dispositif de rappel élastique conforme au premier aspect de l'invention comprend un moyen de centrage destiné à collaborer avec un moyen de centrage complémentaire du piston afin de réaliser un centrage du dispositif de rappel élastique par rapport audit piston. Selon une première alternative, le moyen de centrage prend la forme d'au moins un plot cylindrique d'extension axiale formant une surface d'épaulement radiale sensiblement parallèle à un axe de symétrie du dispositif de rappel élastique. Selon une deuxième alternative, le moyen de centrage prend la forme d'au moins une ouverture axiale ménagée dans la seconde pièce annulaire ;
- le dispositif de rappel élastique du mécanisme d'embrayage conforme au premier aspect de l'invention comprend un moyen de fixation destiné à solidariser le dispositif de rappel élastique au piston du mécanisme d'embrayage. Selon une première alternative, le moyen de fixation prend la forme d'un premier moyen d'encliquetage destiné à collaborer avec un moyen complémentaire d'encliquetage situé sur le piston. Selon une deuxième alternative, le moyen de fixation prend la forme d'une ouverture axiale située ménagée sur la seconde pièce annulaire. Selon une troisième alternative, le moyen de fixation prend la forme d'un rivet, préférentiellement extrudé ;
- le moyen de fixation est du type détachable ;
- lorsque le dispositif de rappel élastique du mécanisme d'embrayage conforme au premier aspect de l'invention comprend à la fois un moyen de centrage et un moyen de fixation, le moyen de centrage est le moyen de fixation. En d'autres termes, le moyen de centrage et le moyen de fixation sont confondus ;
- la partie terminale coudée de la seconde pièce annulaire s'étend axialement dans une direction opposée par rapport à la première pièce annulaire ;
- la pluralité d'éléments élastiques est du type à ressorts hélicoïdaux.

L'invention concerne un mécanisme d'embrayage destiné à être installé entre un moteur et une transmission de véhicule, lequel mécanisme d'embrayage comprend :
- un embrayage en rotation autour d'un axe de rotation ;
- un système d'actionnement agencé pour embrayer ou débrayer l'embrayage, ledit système d'actionnement comprenant :
   ∘ une chambre de commande agencée pour recevoir un fluide pressurisé ;
   ∘ une chambre d'équilibrage délimitée en partie par un piston, le piston étant mobile axialement et délimitant radialement vers l'extérieur la chambre de commande par une portée d'extension axiale, ledit piston s'étendant radialement à l'extérieur de ladite chambre de commande afin d'embrayer ou de débrayer l'embrayage sous l'effet du fluide pressurisé contenu dans la chambre de commande ;
   ∘ un dispositif de rappel élastique conforme au premier aspect de l'invention ou selon l'un quelconque de ses perfectionnements, ledit dispositif de rappel élastique étant logé dans la chambre d'équilibrage et s'étendant entre le piston et une face latérale de la chambre d'équilibrage du mécanisme d' embrayage;
   un joint d'étanchéité du dispositif de rappel élastique est simultanément en appui radial contre le moyeu support et en appui axial contre le piston.Par appui radial, on entend que le joint d'étanchéité du dispositif de rappel élastique est en appui contre une portée circonférentielle contre le moyeu support.

L'invention propose ainsi un mécanisme d'embrayage dans lequel l'étanchéité de la chambre d'équilibrage est assurée par le dispositif de rappel élastique. Cette configuration avantageuse permet de simplifier les procédés d'industrialisation d'un tel mécanisme d'embrayage et, consécutivement, de réduire les coûts de fabrication.

Dans la suite de la description et dans les revendications, on utilisera à titre non limitatif et afin d'en faciliter la compréhension, les termes :
- « avant » ou « arrière » selon la direction par rapport à une orientation axiale déterminée par l'axe O principal de rotation du système de transmission, « l'arrière » désignant la partie située à droite des figures, du côté de la transmission, et « l'avant » désignant la partie gauche des figures, du côté du moteur ; et
- « intérieur / interne » ou « extérieur / externe » par rapport à l'axe O et suivant une orientation radiale, orthogonale à ladite orientation axiale, « l'intérieur » désignant une partie proximale de l'axe O et « l'extérieur » désignant une partie distale de l'axe O.

Le mécanisme d'embrayage conforme à l'invention peut comprendre avantageusement au moins un des perfectionnements ci-dessous, les caractéristiques techniques formant ces perfectionnements pouvant être prises seules ou en combinaison :
- la chambre d'équilibrage est située à l'opposé de la chambre de commande par rapport au piston ;
- le dispositif de rappel élastique est distinct du piston ;
- la partie terminale coudée du dispositif de rappel élastique s'étend selon une direction axiale, ladite partie terminale coudée étant située radialement entre une extrémité intérieure du piston et un moyeu support du mécanisme d'embrayage. Cette configuration astucieuse permet d'intercaler le joint d'étanchéité situé notamment sur la partie terminale coudée du dispositif de rappel élastique entre le piston et le moyeu support ;
- le joint d'étanchéité du dispositif de rappel élastique est au moins en partie en appui contre le moyeu support et contre le piston ;
- le joint d'étanchéité est précontraint axialement entre la seconde pièce annulaire et le piston ;
- au niveau du bord d'élongation radiale de la seconde pièce annulaire du dispositif de rappel élastique, la deuxième garniture du joint d'étanchéité est interposée entre ladite seconde pièce annulaire et le piston du mécanisme d'embrayage ;
- un espace axial est formé entre le piston et la seconde pièce annulaire du dispositif de rappel élastique le long de laquelle s'étend la deuxième garniture du joint d'étanchéité, l'espace axial, pris le long d'une direction axiale, étant inférieur ou égal à l'épaisseur de la deuxième garniture du joint d'étanchéité. Cette configuration avantageuse permet de réaliser un pincement de la deuxième garniture contre le piston afin d'améliorer la tenue du joint d'étanchéité sur le dispositif de rappel élastique d'une part, et d'autre part d'améliorer l'étanchéité entre le piston et ledit dispositif de rappel élastique, et consécutivement d'améliorer l'étanchéité de la chambre de commande. Selon une première variante de réalisation, l'espace axial est formé sur une partie du piston située en regard de la seconde pièce annulaire du dispositif de rappel élastique le long de laquelle s'étend la deuxième garniture du joint d'étanchéité. Selon une deuxième variante de réalisation, l'espace axial est formé sur une zone de la seconde pièce annulaire du dispositif de rappel élastique le long de laquelle s'étend la deuxième garniture du joint d'étanchéité, ladite zone étant située en regard du piston ;
- le joint d'étanchéité du dispositif de rappel élastique est en appui contre le moyeu support au niveau de la première garniture dudit joint d'étanchéité ;
- la lèvre du joint d'étanchéité du dispositif de rappel élastique est située à une extrémité axiale dudit joint d'étanchéité, la lèvre étant en appui contre le moyeu support du mécanisme d'embrayage ;
- il existe un jeu radial entre la deuxième garniture du joint d'étanchéité du dispositif de rappel élastique et une extrémité radiale intérieure du piston ;
- le dispositif de rappel élastique du mécanisme d'embrayage comprend un moyen de centrage collaborant avec un moyen de centrage complémentaire du piston afin de réaliser un centrage dudit dispositif de rappel élastique par rapport audit piston. Selon une première alternative, le moyen de centrage prend la forme d'une portée cylindrique d'extension axiale formant une surface d'épaulement radiale sensiblement parallèle à un axe de symétrie du dispositif de rappel élastique. Selon une deuxième alternative, le moyen de centrage prend la forme d'une ouverture axiale ménagée dans la seconde pièce annulaire ;
- le dispositif de rappel élastique du mécanisme d'embrayage comprend un moyen de fixation solidarisant le dispositif de rappel élastique au piston du mécanisme d'embrayage. Selon une première alternative, le moyen de fixation prend la forme d'un premier moyen d'encliquetage destiné à collaborer avec un moyen complémentaire d'encliquetage situé sur le piston. Selon une deuxième alternative, le moyen de fixation prend la forme d'une ouverture axiale située ménagée sur la seconde pièce annulaire. Selon une troisième alternative, le moyen de fixation prend la forme d'un rivet, préférentiellement extrudé ;
- le moyen de fixation est du type détachable ;
- lorsque le dispositif de rappel élastique comprend à la fois un moyen de centrage et un moyen de fixation, le moyen de centrage est le moyen de fixation. En d'autres termes, le moyen de centrage et le moyen de fixation sont confondus ;
- le dispositif de rappel élastique comprend un moyen de centrage dispositif de rappel élastique formé par au moins une ouverture axiale collaborant avec au moins un plot cylindrique complémentaire d'extension axiale et formé sur une face du piston en regard du dispositif de rappel élastique ;
- la face latérale de la chambre d'équilibrage contre laquelle le dispositif de rappel élastique est en appui est formée par une face d'un porte-disques d'entrée du mécanisme d'embrayage située en regard du piston ;
- le mécanisme d'embrayage conforme à l'invention est du type multidisques ;
- selon un mode de réalisation préféré, le mécanisme d'embrayage conforme à l'invention est du type à double embrayages et comprenant un premier embrayage piloté par un premier système d'actionnement et un deuxième embrayage piloté par un deuxième système d'actionnement. Selon une première variante, les premier et deuxième embrayages sont disposés radialement, le deuxième embrayage étant situé radialement à l'intérieur du premier embrayage. Selon une deuxième variante de réalisation, les premier et deuxième embrayages sont disposés axialement, le deuxième embrayage étant situé axialement en arrière du premier embrayage.

Selon un mode de réalisation l'invention propose :
un mécanisme d'embrayage destiné à être installé entre un moteur et une transmission de véhicule, lequel mécanisme d'embrayage comprend :
- un embrayage en rotation autour d'un axe de rotation ;
- un système d'actionnement agencé pour embrayer ou débrayer l'embrayage, ledit système d'actionnement comprenant :
   ∘ une chambre de commande agencée pour recevoir un fluide pressurisé ;
   ∘ une chambre d'équilibrage délimitée en partie par un piston, le piston étant mobile axialement et délimitant radialement vers l'extérieur la chambre de commande par une portée d'extension axiale, ledit piston s'étendant radialement à l'extérieur de ladite chambre de commande afin d'embrayer ou de débrayer l'embrayage sous l'effet du fluide pressurisé contenu dans la chambre de commande;
   ∘ un dispositif de rappel élastique destiné à générer un effort à l'encontre d'un piston mis en mouvement par un système d'actionnement d'un embrayage du mécanisme d'embrayage, ledit dispositif de rappel élastique comprenant :
      - une première pièce annulaire destinée à prendre appui contre une face d'appui du mécanisme d'embrayage;
      - une seconde pièce annulaire destinée à prendre appui contre le piston du mécanisme d'embrayage;
      - une pluralité d'éléments élastiques s'étendant entre la première pièce annulaire et la seconde pièce annulaire;

la seconde pièce annulaire comprenant à son extrémité périphérique intérieure un joint d'étanchéité, et la seconde pièce annulaire est en appui contre une face du piston orientée axialement en regard de la pluralité d'éléments élastiques,
ledit dispositif de rappel élastique étant logé dans la chambre d'équilibrage et s'étendant entre le piston et une face latérale de la chambre d'équilibrage,
et l'extrémité périphérique intérieure de la seconde pièce annulaire est formée par une partie terminale coudée, ladite partie terminale coudée du dispositif de rappel élastique s'étendant selon une direction axiale et ladite partie terminale coudée étant située radialement entre une extrémité intérieure du piston et un moyeu support du mécanisme d'embrayage.

Des modes de réalisation variés de l'invention selon les revendications annexées sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue en perspective et partiellement coupée d'un dispositif de rappel élastique ;
- la FIGURE 2 illustre une vue en coupe axiale d'un exemple de réalisation de mécanisme d'embrayage conforme à l'invention ;
- la FIGURE 3 illustre une vue de détail des systèmes d'actionnement du mécanisme d'embrayage de la FIGURE 2
- la FIGURE 4 illustre une vue en perspective et partiellement coupée du mécanisme d'embrayage illustré à la FIGURE 2 ;
- la FIGURE 5 illustre une vue de face d'un dispositif de rappel élastique monté sur un piston, vu depuis une chambre d'équilibrage du mécanisme d'embrayage illustré à la FIGURE 2 ;
- la FIGURE 6A illustre une vue en coupe axiale suivant l'axe de coupe PP représenté sur la FIGURE 5 ;
- la FIGURE 6B illustre la vue de détail Q représentée sur la FIGURE 6A.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

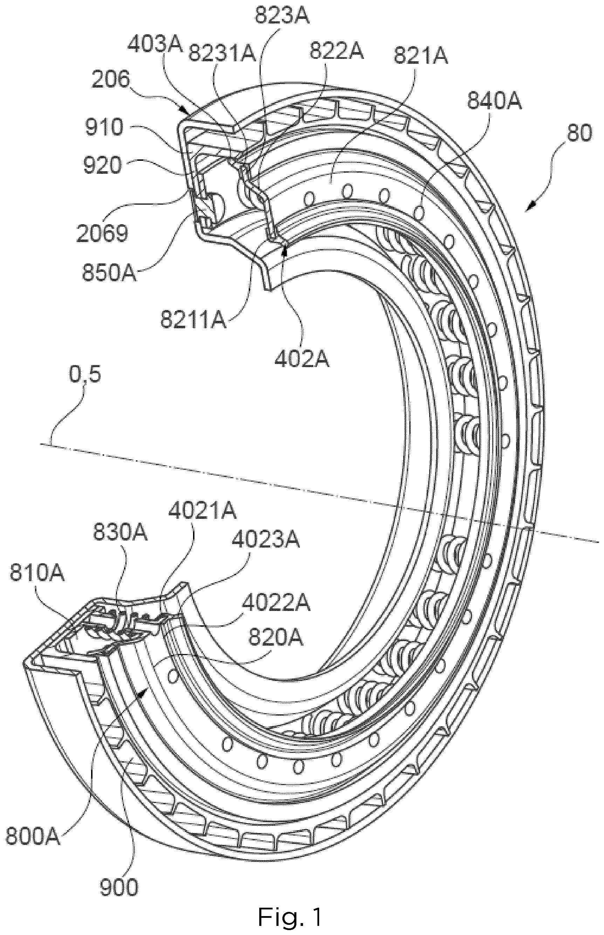

En référence à la FIGURE 1, un exemple de réalisation d'un dispositif de rappel élastique 800 est représenté. Un tel dispositif de rappel élastique 800 est configuré pour pouvoir générer un effort à l'encontre d'un piston 105, 205 mis en mouvement par un système d'actionnement 300 d'un embrayage 100, 200 d'un mécanisme d'embrayage. À cet effet, le dispositif de rappel élastique 800 comprend :
- une première pièce annulaire 810A destinée à prendre appui contre une face d'appui du mécanisme d'embrayage ;
- une seconde pièce annulaire 820A destinée à prendre appui contre le piston 105, 205 du mécanisme d'embrayage ;
- une pluralité d'éléments élastiques 830A s'étendant entre la première pièce annulaire 810A et la seconde pièce annulaire 820A. Dans l'exemple illustré sur la FIGURE 1, la pluralité d'éléments élastiques 830A est du type à ressorts hélicoïdaux, lesdits ressorts hélicoïdaux étant angulairement régulièrement répartis autour d'un axe de symétrie S du dispositif de rappel élastique 800.

De manière particulière, la seconde pièce annulaire 820A du dispositif de rappel élastique 800 comprend à son extrémité périphérique intérieure 8211A un joint d'étanchéité 402A dit deuxième joint d'étanchéité 402A. Le joint d'étanchéité 402A s'étend axialement dans une direction opposée à la première pièce annulaire 810A par rapport à la seconde pièce annulaire 820A.

La seconde pièce annulaire 820 du dispositif de rappel élastique 800 est d'axe de symétrie S. Conformément à l'invention, la seconde pièce annulaire 820 est en appui contre une face du piston 105, 205 correspondant, ladite face étant orientée axialement en regard de la pluralité d'éléments élastiques 830. Dans l'exemple de réalisation illustré sur la FIGURE 1, la seconde pièce annulaire 820A est formée par un bord d'élongation radial 821A qui s'étend depuis l'extrémité périphérique intérieure 8211A vers une portée intermédiaire 822A oblique. La portée intermédiaire 822A oblique est prolongée radialement vers l'extérieur par une portée d'extension radiale extérieure 823A qui porte au niveau de son extrémité extérieure 8231A un autre joint d'étanchéité 403A, dit troisième joint d'étanchéité 403A.

Dans l'exemple de réalisation illustré sur la FIGURE 1, l'extrémité périphérique intérieure 8211A de la seconde pièce annulaire 820A du dispositif de rappel élastique 800 est située dans le prolongement radial du bord d'élongation radial 821A de ladite seconde pièce annulaire 820A. Alternativement, l'extrémité périphérique intérieure 8211A de la seconde pièce annulaire 820A peut être formée par une partie terminale coudée qui préférentiellement s'étend axialement dans une direction opposée par rapport à la première pièce annulaire 810A.

La seconde pièce annulaire 820A comprend aussi une pluralité d'ouvertures 860A régulièrement angulairement réparties autour de l'axe de symétrie S. Les ouvertures 860A forment des trous débouchant au travers de la seconde pièce annulaire 820A. Les ouvertures 860A sont destinées à permettre un centrage et/ou une fixation du dispositif de rappel élastique sur le piston correspondant du mécanisme d'embrayage.

Le deuxième joint d'étanchéité 402A est avantageusement formé par une première garniture 4021A située axialement du côté de la première pièce annulaire 810A par rapport à la seconde pièce annulaire 820A, et une deuxième garniture 4022A qui est située du côté opposé à la première pièce annulaire 810A par rapport à la seconde pièce annulaire 820A. Ainsi, le deuxième joint d'étanchéité 402A est fixé solidairement sur la seconde pièce annulaire 820A, et plus particulièrement au niveau de son extrémité périphérique intérieure 8211A, par exemple par emmanchement.

De manière avantageuse, la deuxième garniture 4022A du deuxième joint d'étanchéité 402A s'étend sur le bord d'élongation radiale 821A de la seconde pièce annulaire 820A, radialement au-delà de la première garniture 4021A.

Dans l'exemple de réalisation illustré sur la FIGURE 1, le deuxième joint d'étanchéité 402A comprend une lèvre 4023 qui s'étend simultanément radialement à l'intérieur de l'extrémité périphérique intérieure 8211A de la seconde pièce annulaire 820A et axialement dans une direction opposée à la première pièce annulaire 810A par rapport à la seconde pièce annulaire 820A.

Le dispositif de rappel élastique 800 comprend avantageusement un réducteur de diamètre 900 comprenant une portée cylindrique 910 et une portée radiale 920. La portée cylindrique 910 est en contact radial contre une pièce d'appui du mécanisme d'embrayage, par exemple un deuxième porte-disques de sortie 206 tel que représenté sur la FIGURE 1. La portée radiale 920 du réducteur de diamètre 900 est avantageusement intercalée entre la première pièce annulaire 810A et la pièce d'appui du mécanisme d'embrayage. Plus particulièrement, la portée radiale 920 du réducteur de diamètre 900 est en appui axial contre la première pièce annulaire 810A.

De manière avantageuse, le dispositif de rappel élastique 800 comprend aussi des moyens de fixation 850A du réducteur de diamètre 900 sur la première pièce annulaire 810A. dans l'exemple illustré sur la FIGURE 1, les moyens de fixation 850A sont du type d'au moins un rivet angulairement régulièrement réparti autour de l'axe de symétrie S. Préférentiellement, la pièce d'appui du mécanisme d'embrayage comprend une ouverture 2069 située en regard du moyen de fixation 850 du dispositif de rappel élastique 800.

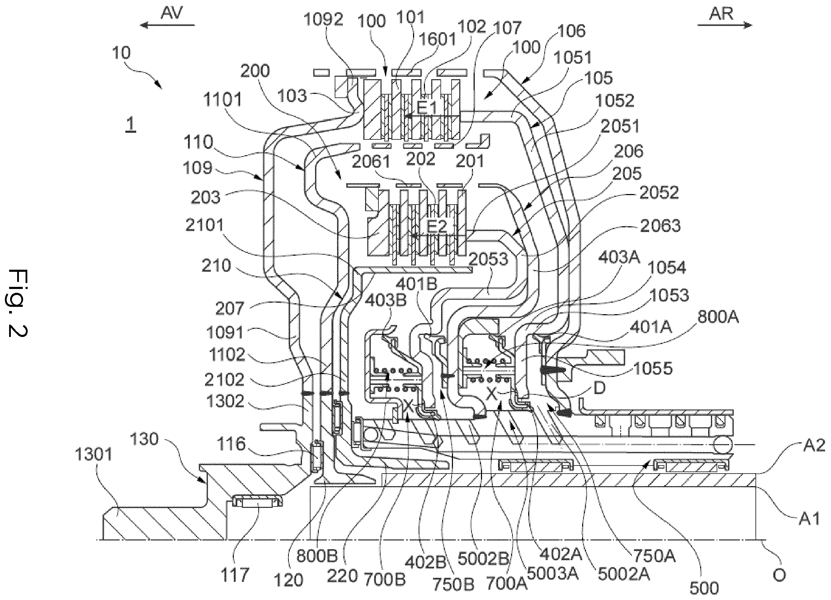

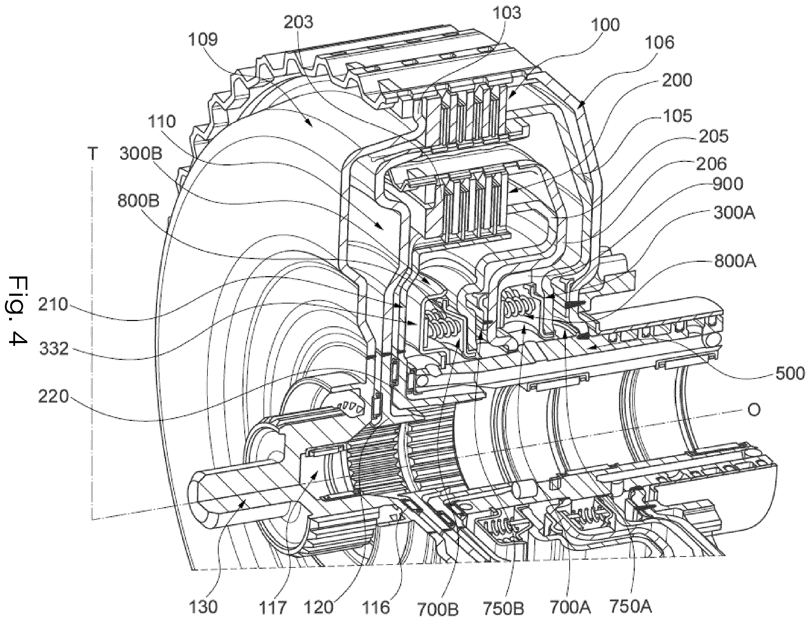

En référence aux FIGURES 2 à 4, l'exemple de réalisation illustré du mécanisme d'embrayage 10 conforme à l'invention est préférentiellement du type à double embrayage humide, et préférentiellement encore dans une position dite radiale, le premier embrayage 100 étant situé à l'extérieur du deuxième embrayage 200. Alternativement, le mécanisme à double embrayages 10 peut être dans une configuration dite axiale, le premier embrayage 100 étant situé devant AV le deuxième embrayage 200. Bien entendu, l'invention ne se limite pas aux mécanismes à double embrayages 10 mais comprend aussi les mécanismes à simple embrayage humide.

Le mécanisme à double embrayages 10 est intégré sur une chaine de transmission 1 comprenant une transmission couplée en rotation au mécanisme d'embrayage 100.

D'une manière générale, le mécanisme à double embrayages 10 est agencé pour pouvoir coupler en rotation un arbre d'entrée non représenté à un premier arbre de transmission A1 ou alternativement à un deuxième arbre de transmission A2 par l'intermédiaire respectivement du premier embrayage 100 ou du deuxième embrayage 200.

Dans le contexte de l'invention, l'arbre d'entrée est entrainé en rotation par au moins un vilebrequin d'un moteur, par exemple un moteur thermique ; et les premier et deuxième arbres de transmission A1, A2 sont coaxiaux et destinés à être couplés en rotation à la transmission telle que par exemple une boite de vitesses du type de celles équipant des véhicules automobiles.

Comme illustré sur les FIGURES 2 à 4, le premier embrayage 100 et le deuxième embrayage 200 sont avantageusement du type multidisques. Chaque embrayage multidisques comprend d'une part une pluralité de premiers éléments de friction 101, 201, tels que par exemple des flasques, liés solidairement en rotation à l'arbre d'entrée, et d'autre part une pluralité de deuxièmes éléments de friction 102, 202, tels que par exemples des disques de friction, liés solidairement en rotation à au moins l'un des arbres de transmission A1, A2.

Le premier arbre de transmission A1 est couplé en rotation à l'arbre d'entrée et entraîné par lui en rotation lorsque le premier embrayage 100 est configuré dans une position dite embrayée pour laquelle la pluralité de premiers éléments de friction 101 est couplée en rotation à la pluralité de deuxièmes éléments de friction 102. Alternativement, le premier arbre de transmission A1 est découplé en rotation de l'arbre d'entrée lorsque le premier embrayage 100 est configuré dans une position dite débrayée pour laquelle la pluralité de premiers éléments de friction 101 est découplée en rotation à la pluralité de deuxièmes éléments de friction 102.

De manière analogue, le deuxième arbre de transmission A2 est couplé en rotation à l'arbre d'entrée et entraîné par lui en rotation lorsque le deuxième embrayage 200 est configuré dans une position embrayée pour laquelle la pluralité de premiers éléments de friction 201 est couplée en rotation à la pluralité de deuxièmes éléments de friction 202. Alternativement, le deuxième arbre de transmission A2 est découplé en rotation de l'arbre d'entrée lorsque le deuxième embrayage 200 est configuré dans une position dite débrayée pour laquelle la pluralité de premiers éléments de friction 201 est découplée en rotation à la pluralité de deuxièmes éléments de friction 202.

Le premier embrayage 100 et le deuxième embrayage 200 sont agencés pour transmettre alternativement une puissance dite d'entrée - un couple et une vitesse de rotation - de l'arbre d'entrée, à l'un des deux arbres de transmission A1, A2, en fonction de la configuration respective de chaque embrayage 100 et 200 et par l'intermédiaire d'un voile d'entrée 109.

Le premier embrayage 100 et le deuxième embrayage 200 sont agencés pour ne pas être simultanément dans la même configuration embrayée. En revanche, les premier et deuxième embrayages 100, 200 peuvent simultanément être configurés dans leur position débrayée.

Le mécanisme à double embrayages 10 comprend un élément d'entrée qui est couplé en rotation d'une part à l'arbre d'entrée et d'autre part au voile d'entrée 109 afin de transmettre la puissance - le couple et la vitesse de rotation - générée au niveau du moteur à l'un des embrayages 100, 200 du mécanisme à double embrayages 10. De préférence, l'élément d'entrée du mécanisme à double embrayages 10 comprend un moyeu d'entrée 130, préférentiellement en rotation autour de l'axe longitudinal O. Sur son élongation intérieure, le moyeu d'entrée 130 est lié en rotation et/ou axialement à l'arbre d'entrée par l'intermédiaire de son élongation intérieure 1301, et éventuellement via un dispositif d'amortissement non représenté tel qu'un double volant amortisseur par exemple.

Le moyeu d'entrée 130 comprend une élongation extérieur 1302 qui est couplée au voile d'entrée 109, et plus particulièrement à une extrémité intérieure 1091 du voile d'entrée 109. L'extrémité intérieure 1091 est située vers l'avant AV du voile d'entrée 109. Préférentiellement, le voile d'entrée 109 et le moyeu d'entrée 130 sont solidaires, par exemple fixés par soudage et/ou par rivetage.

Le voile d'entrée 109 comprend une extrémité supérieure 1092 par laquelle le voile d'entrée 109 est lié en rotation au premier embrayage 100. Cette liaison est réalisée par l'intermédiaire d'une portée d'élongation axiale extérieure 1061 d'un premier porte-disques d'entrée 106, le premier porte-disques d'entrée 106 étant lié en rotation au voile d'entrée 109, préférentiellement par coopération de formes, par exemple par des cannelures au niveau de l'extrémité avant AV de ladite portée d'élongation axiale extérieure 1061.

Le premier embrayage 100 et le deuxième embrayage 200 sont chacun commandés par un système d'actionnement 300A, 300B qui seront décrits ultérieurement. Chaque système d'actionnement 300A, 300B est agencé pour pouvoir configurer respectivement le premier embrayage 100 et le deuxième embrayage 200 dans une configuration quelconque comprise entre la configuration embrayée et la configuration débrayée.

Le premier système d'actionnement 300A est lié au premier embrayage 100 par l'intermédiaire du premier piston 105 comprenant une première partie radialement extérieure et une deuxième partie radialement intérieure. D'une manière générale, le premier piston 105 est agencé pour transmettre au premier embrayage 100 un effort axial E1 exercé parallèlement à l'axe O via sa première partie radialement extérieure, sa deuxième partie radialement intérieure collaborant avec un générateur d'effort pour configurer le premier embrayage 100 dans l'une des configurations détaillées précédemment. Au niveau de sa première partie radialement intérieure, le premier piston 105 comprend une pluralité de premières portées d'extension axiales 1051 extérieures qui s'étendent axialement vers l'avant AV pour pouvoir presser les premiers éléments de friction 101 contre les deuxièmes éléments de friction 102 d'une part, et contre un moyen de réaction extérieur 103 lié mécaniquement au voile d'entrée 109 d'autre part. Lorsque les premiers éléments de friction 101 sont écartés des deuxièmes éléments de friction 102, alors le premier embrayage 100 est configuré dans sa configuration débrayée. En revanche, lorsque les premiers éléments de friction 101 sont pressés contre les deuxièmes éléments de friction 102, alors le premier embrayage 100 est configuré dans sa configuration embrayée.

Le premier piston 105 prend la forme d'une tôle ondulée et incurvée axialement vers l'avant AV à son extrémité radiale extérieure.

Le premier piston 105 comprend une portée d'extension radiale supérieure 1052 située en arrière AR des premières portées d'extension axiales 1051. La première portée d'extension radiale supérieure 1052 s'étend radialement parallèlement à l'axe transversal T depuis le premier embrayage 100 jusqu'en limite intérieur du deuxième embrayage 200.

Une portée d'extension axiale intermédiaire 1053 du premier piston 105, parallèle à l'axe longitudinal O prolonge la portée d'extension radiale supérieure 1052 du premier piston 105 partiellement sous le deuxième embrayage 200 et vers l'avant AV du mécanisme à double embrayages 10. La portée d'extension axiale intermédiaire 1053 est située radialement sous le deuxième embrayage 200 et axialement vers l'arrière AR.

Enfin, le premier piston 105 comprend une première portée d'extension radiale intérieure 1055 et reliée à la portée d'extension axiale intermédiaire 1053 par l'intermédiaire d'une première zone incurvée 1054. L'extrémité radiale intérieure de la portée d'extension radiale intérieure 1055 est située à distance d'un moyeu support 500 qui sera décrit ultérieurement.

À titre d'exemple non limitatif, le premier piston 105 peut être obtenu par emboutissage.

Le moyen de réaction extérieur 103 est solidaire du voile d'entrée 109. De préférence, le moyen de réaction extérieur 103 est relié au voile d'entrée 109 par l'intermédiaire du porte-disques d'entrée 106.

Le moyen de réaction extérieur 103 a une forme complémentaire à celle des premiers ou deuxièmes éléments de friction 101, 102, de manière à permettre un couplage par friction des premiers et deuxièmes éléments de friction 101, 102 lorsque le premier système d'actionnement 300A exerce le premier effort axial E1 vers l'avant AV pour configurer le premier embrayage 100 dans sa position embrayée. A contrario, lorsque le premier piston 105 est repoussé vers l'arrière AR par des éléments élastiques de rappel qui seront décrits ultérieurement, alors les premiers éléments de frictions 101 du premier embrayage 100 se séparent des deuxièmes éléments de friction 102, permettant de découpler lesdits éléments de friction et permettant ainsi de configurer le premier embrayage 100 dans sa configuration débrayée.

Le premier embrayage 100 est destiné à être couplé en rotation au premier arbre de transmission A1 par l'intermédiaire d'un premier porte-disques de sortie 110 formant un élément de sortie dudit premier embrayage 100. Plus particulièrement, le premier porte-disques de sortie 110 est couplé en rotation aux deuxièmes éléments de friction 102 par l'intermédiaire d'une extrémité supérieure 1101 que le porte-disques de sortie 110 comprend. Plus particulièrement encore, le premier porte-disques de sortie 110 est couplé en rotation à un premier moyeu de sortie 120 par l'intermédiaire d'une extrémité intérieure 1102 que le premier porte-disques de sortie 110 comprend.

Le premier porte-disques de sortie 110 comporte sur sa périphérie radiale extérieure une élongation axiale 107 qui est munie d'une denture destinée à coopérer avec une denture complémentaire sur chaque deuxième élément de friction 102, et plus particulièrement à la périphérie radiale intérieure de chaque deuxième élément de friction 102 du premier embrayage 100. L'élongation axiale 107 du premier porte-disques de sortie 110 est située radialement sous les premiers 101 et deuxièmes 102 éléments de friction du premier embrayage 100. Le premier porte-disques de sortie 110 est ainsi couplé en rotation par engrènement avec les deuxièmes éléments de friction 102 du premier embrayage 100.

Le premier moyeu de sortie 120 comporte radialement à l'intérieur des cannelures axiales agencées pour coopérer avec des cannelures complémentaires situées sur le premier arbre de transmission A1, de manière à réaliser un couplage en rotation.

Un palier radial 117 est interposé entre le premier moyeu de sortie 120 et le moyeu d'entrée 130 afin de supporter les efforts radiaux du moyeu d'entrée 130 et/ou du voile d'entrée 109 malgré les vitesses de rotation différentes auxquelles peuvent respectivement tourner l'arbre d'entrée et le premier arbre de transmission A1.

De manière analogue, le deuxième embrayage 200 du mécanisme à double embrayages 10 est de conception similaire à celle du premier embrayage 100.

Le deuxième système d'actionnement 300B est lié au deuxième embrayage 200 par l'intermédiaire d'un deuxième piston 205.

Le deuxième piston 205 est situé axialement entre un deuxième porte-disques de sortie 206 et le deuxième embrayage 200.

Le deuxième système d'actionnement 300B est lié au deuxième embrayage 200 par l'intermédiaire du deuxième piston 205 comprenant une première partie radialement extérieure et une deuxième partie radialement intérieure. D'une manière générale, le deuxième piston 205 est agencé pour transmettre au deuxième embrayage 200 un effort axial E2 exercé parallèlement à l'axe longitudinal O via sa première partie radialement extérieure collaborant avec les éléments de friction 201, 202 dudit deuxième embrayage 200, et de sa deuxième partie radialement intérieure collaborant avec un générateur d'effort pour configurer le deuxième embrayage 200 dans l'une des configurations détaillées précédemment. Au niveau de sa première partie radialement intérieure, le deuxième piston 205 comprend une pluralité de deuxièmes portées d'extension axiales 2051 qui s'étendent axialement vers l'avant AV pour pouvoir presser les premiers éléments de friction 201 contre les deuxièmes éléments de friction 202 d'une part, et contre un moyen de réaction intérieur 203 du deuxième embrayage 200 d'autre part. Lorsque les premiers éléments de friction 201 sont écartés des deuxièmes éléments de friction 202, alors le deuxième embrayage 200 est configuré dans sa configuration débrayée. En revanche, lorsque les premiers éléments de friction 201 sont pressés contre les deuxièmes éléments de friction 202, alors le deuxième embrayage 200 est configuré dans sa configuration embrayée.

Le deuxième piston 205 prend la forme d'une tôle ondulée et incurvée axialement vers l'avant AV à son extrémité radiale extérieure.

Le deuxième piston 205 comprend une portée d'extension radiale supérieure 2052 située en arrière AR des deuxièmes portées d'extension axiales 2051. La portée d'extension radiale supérieure 2052 du deuxième piston 205 est interposée axialement entre un deuxième porte-disques d'entrée 206 et le deuxième embrayage 200. La portée d'extension radiale supérieure 2052 s'étend radialement depuis le deuxième embrayage 200 jusqu'à l'intérieur du deuxième embrayage 200, et plus particulièrement à l'extérieur d'une portée d'extension axiale intermédiaire 2063 du deuxième porte-disques de sortie 206.

Une portée d'extension axiale intermédiaire 2053 du deuxième piston 205 prolonge vers l'avant AV et parallèlement à l'axe O la portée d'extension radiale supérieure 2052 du deuxième piston 205. La portée d'extension axiale intermédiaire 2053 est située radialement à l'intérieur du deuxième embrayage 200 et à l'extérieur de la portée d'extension axiale intermédiaire 2063 du deuxième porte-disques de sortie 206.

Enfin, le deuxième piston 205 comprend une pluralité de deuxièmes portées d'extensions radiales intérieures 2055 et reliées à la portée d'extension axiale intermédiaire 2053 par l'intermédiaire d'une zone incurvée 2054 du deuxième piston 205. La zone incurvée 2054 du deuxième piston 205 prend la forme d'un « S » dans le plan de coupe transversal illustré sur la FIGURE 2.

À titre d'exemple non limitatif, le deuxième piston 205 peut être obtenu par emboutissage.

Le deuxième porte-disques de sortie 206 du mécanisme à double embrayages 10 comprend une partie d'élongation axiale extérieure 2061 orientée vers l'avant AV. La partie d'élongation axiale extérieure 2061 du deuxième porte-disques de sortie 206 est située radialement à l'extérieur du deuxième embrayage 200, et elle s'étend axialement sur toute la longueur dudit deuxième embrayage 200. Le deuxième porte-disques de sortie 206 comprend aussi une portée d'extension radiale supérieure 2062 située en arrière AR de la partie d'élongation axiale extérieure 2061. La portée d'extension radiale supérieure 2062 s'étend radialement depuis l'extérieur du deuxième embrayage 200 jusqu'à l'intérieur du deuxième embrayage 200.

Une portée d'extension axiale intermédiaire 2063 du deuxième porte-disques de sortie 206 prolonge vers l'avant AV et parallèlement à l'axe O la portée d'extension radiale supérieure 2062 du deuxième porte-disques de sortie 206. La portée d'extension axiale intermédiaire 2063 est située radialement sous la deuxième portée axiale 2053 du deuxième piston 205.

Enfin, le deuxième porte-disques de sortie 206 comprend une portée d'extension radiale intérieure 2065 reliée à la portée d'extension axiale intermédiaire 2063 par l'intermédiaire d'une zone incurvée 2064. L'extrémité radiale intérieure de la portée d'extension radiale intérieure 2065 est fixée solidairement contre le moyeu support 500, par exemple par soudage.

Ainsi, le premier porte-disques de sortie 106 et le deuxième porte-disques de sortie 206 sont couplées en rotation par l'intermédiaire du moyeu support 500 : chaque porte-disques de sortie 106, 206 est respectivement fixé solidairement audit moyeu support 500 par l'intermédiaire de son extrémité radiale intérieure.

Le moyen de réaction intérieur 203 est solidaire du deuxième porte-disques d'entrée 206, et plus particulièrement au niveau de sa partie d'élongation axiale extérieure 2061 à laquelle le moyen de réaction intérieur 203 est fixé par tous moyens, tels que par exemple par soudage ou par rivetage. Alternativement, le moyen de réaction intérieur 203 et le deuxième porte-disques d'entrée 206 sont issus de matière. Le moyen de réaction extérieur 203 a une forme complémentaire à celle des premiers ou deuxièmes éléments de friction 201, 202, de manière à permettre un couplage par friction des premiers et deuxièmes éléments de friction 201, 202 lorsque le deuxième système d'actionnement 300B exerce un effort E2 axial vers l'avant AV pour configurer le deuxième embrayage 200 dans sa position embrayée. A contrario, lorsque le deuxième piston 205 est repoussé vers l'arrière AR par des éléments élastiques de rappel qui seront décrits ultérieurement, alors les premiers éléments de frictions 201 du deuxième embrayage 200 se séparent des deuxièmes éléments de friction 202, permettant de découpler lesdits éléments de friction 201, 202 et permettant ainsi de configurer le deuxième embrayage 200 dans sa configuration débrayée.

Le deuxième embrayage 200 est destiné à être couplé en rotation au deuxième arbre de transmission A2 par l'intermédiaire d'un deuxième porte-disques de sortie 210 formant un élément de sortie dudit deuxième embrayage 200. Plus particulièrement, le deuxième porte-disques de sortie 210 est couplé en rotation aux deuxièmes éléments de friction 202 par l'intermédiaire d'une extrémité supérieure 2101 que le deuxième porte-disques de sortie 210 comprend. Le deuxième porte-disques de sortie 210 est couplé en rotation à un deuxième moyeu de sortie 220 par l'intermédiaire d'une extrémité intérieure 2102, que le deuxième porte-disques de sortie 210 comprend.

Le deuxième porte-disques de sortie 210 comporte sur sa périphérie radiale extérieure une élongation axiale 207 qui est munie d'une denture destinée à coopérer avec une denture complémentaire sur chaque deuxième élément de friction 202, et plus particulièrement à la périphérie radiale intérieure de chaque deuxième élément de friction 202 du deuxième embrayage 200. Le deuxième porte-disques de sortie 210 est ainsi couplé en rotation par engrènement avec les deuxièmes éléments de friction 202 du deuxième embrayage 200.

À cet effet, le deuxième moyeu de sortie 220 comporte au niveau de son extrémité intérieur 2102 des cannelures axiales agencées pour coopérer avec des cannelures complémentaires situées sur le deuxième arbre de transmission A2, de manière à réaliser un couplage en rotation.

Par ailleurs, un palier axial 116 est intercalé entre le premier porte-disques de sortie 110 et le deuxième porte-disques de sortie 210 afin de pouvoir transmettre un effort axial entre les deux porte-disques de sortie 110, 210 qui peuvent tourner à des vitesses différentes lorsque les premier et deuxième embrayages 100, 200 sont configurés dans une configuration différente.

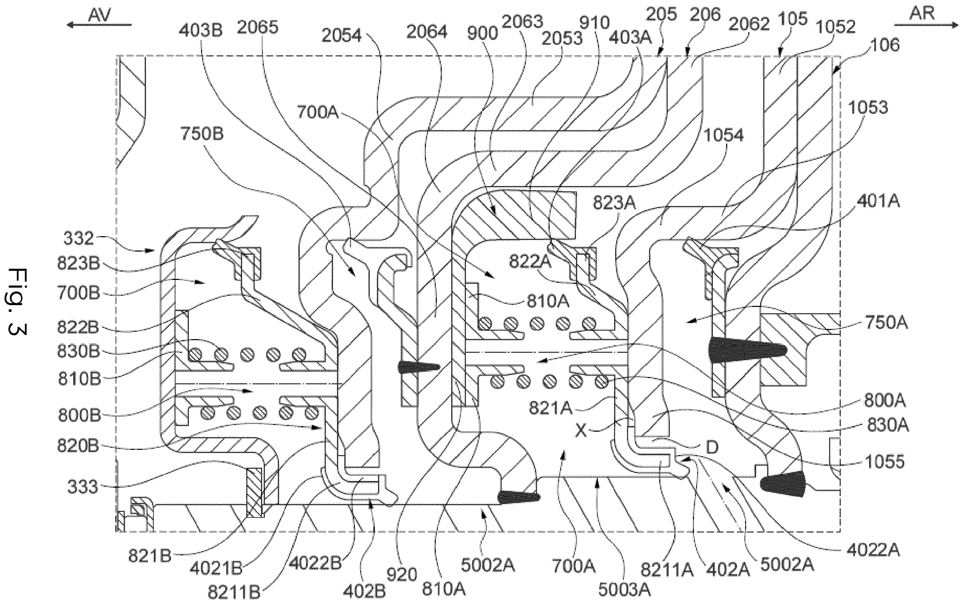

De préférence, et tel qu'illustré plus particulièrement sur la FIGURE 3, chaque système d'actionnement 300A, 300B comprend en outre un dispositif de rappel élastique 800A, 800B agencé pour générer un effort axial orienté vers l'arrière AR et s'opposant au déplacement du piston 105, 205 correspondant lorsqu'il est poussé vers l'avant AV pour embrayer l'embrayage 100, 200 correspondant.

En particulier, le premier dispositif de rappel élastique 800A associé au premier embrayage 100 comprend :
- une première pièce annulaire 810A destinée à prendre appui contre une face d'appui du mécanisme à double embrayages 10, et plus particulièrement au niveau de la portée d'extension radiale intérieure 2065 du deuxième porte-disques d'entrée 206 ;
- une seconde pièce annulaire 820A destinée à prendre appui contre le premier piston 105, et plus particulièrement au niveau de la portée d'extension radiale intérieure 1055 dudit premier piston 105 ;
- une pluralité d'éléments élastiques 830A s'étendant entre la première pièce annulaire 810A et la seconde pièce annulaire 820A du premier dispositif de rappel élastique 800A. De manière avantageuse, la pluralité d'éléments élastiques 830A, sont du type du type à ressorts hélicoïdaux.

De manière comparable, le deuxième dispositif de rappel élastique 800B associé au deuxième embrayage 200 comprend :
- une première pièce annulaire 810B destinée à prendre appui contre une face d'appui du mécanisme à double embrayages 10, et plus particulièrement au niveau d'une plaque de chemisage 332 qui est bloquée axialement vers l'avant AV par un anneau de blocage axial 333 logé dans une gorge circonférentielle de la face extérieure du moyeu support 500 ;
- une seconde pièce annulaire 820B destinée à prendre appui contre le deuxième piston 205, et plus particulièrement au niveau de la portée d'extension radiale intérieure 2055 dudit deuxième piston 205 ;
- une pluralité d'éléments élastiques 830B s'étendant entre la première pièce annulaire 810B et la seconde pièce annulaire 820B du deuxième dispositif de rappel élastique 800B. De manière avantageuse, la pluralité d'éléments élastiques 830B, sont du type du type à ressorts hélicoïdaux.

Conformément à l'invention chaque système d'actionnement 300A, 300B du mécanisme à double embrayages 10 illustré sur les FIGURES 2 à 4 comprend :
- une chambre de commande 750A, 750B agencée pour recevoir un fluide pressurisé ;
- une chambre d'équilibrage 700A, 700B délimitée en partie par un piston, le piston étant mobile axialement et délimitant radialement vers l'extérieur la chambre de commande par une portée d'extension axiale, ledit piston s'étendant radialement à l'extérieur de ladite chambre de commande afin d'embrayer ou de débrayer l'embrayage sous l'effet du fluide pressurisé contenu dans la chambre de commande ;
- un dispositif de rappel élastique 800A, 800B tel que décrit précédemment, ledit dispositif de rappel élastique étant logé dans la chambre d'équilibrage 700A, 700B correspondante et s'étendant entre le piston 105, 205 et la face d'appui correspondantes du mécanisme à double embrayages 10.

La chambre de commande 750A du premier système d'actionnement 300A est agencée pour recevoir un certain volume de fluide hydraulique sous pression afin de générer l'effort axial E1 sur la portée d'extension radiale intérieure 1055 du premier piston 105 et de configurer ainsi le premier embrayage 100 dans l'une des configurations décrites précédemment. Le fluide hydraulique pressurisé est avantageusement acheminé par l'intermédiaire de conduits de circulation fluidiques haute pression traversant au moins en partie le moyeu support 500 et débouchant dans la chambre de commande 750A du premier système d'actionnement 300A au niveau d'une face extérieure dudit moyeu support 500 par un conduit d'alimentation 5002A.

La chambre de commande 750A du premier système d'actionnement 300A est ainsi avantageusement délimitée :
- radialement vers l'intérieur, par une portion du moyeu support 500 ;
- axialement vers l'arrière AR, par une partie d'élongation radiale intérieure du premier porte-disques d'entrée 106 ;
- radialement vers l'extérieur, par la portée d'extension axiale intermédiaire 1053 et la première zone incurvée 1054 du premier piston 105 ; et
- axialement vers l'avant AV, par la portée d'extension radiale intérieure 1055 du premier piston 105.

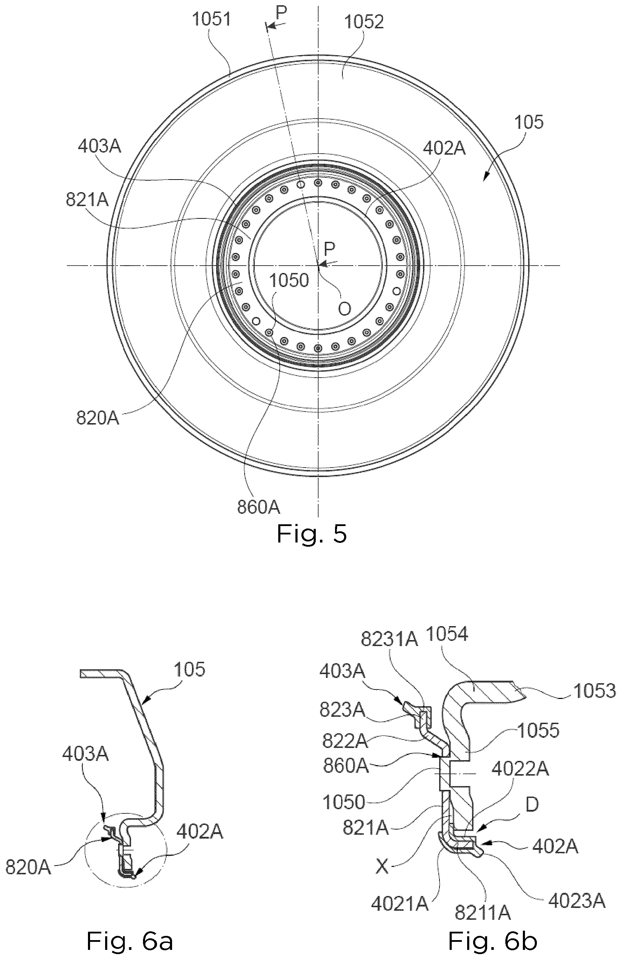

On notera aussi que l'étanchéité de la chambre de commande 750A du premier système d'actionnement 300A est garantie par la présence :
- d'un premier joint d'étanchéité 401A situé entre la partie radiale intérieure du premier porte-disques d'entrée 106 et la portée d'extension axiale intermédiaire 1053 du premier piston 105 ;
- d'un deuxième joint d'étanchéité 402A situé axialement entre l'extrémité radiale intérieure de la portée d'extension radiale intérieure 1055 du premier piston 105 et le moyeu support 500. Le deuxième joint d'étanchéité 402A est avantageusement porté par le dispositif de rappel élastique 800A du premier système d'actionnement 300A, tel que décrit notamment au travers de la FIGURE 1 pour un premier mode de réalisation, et tel qu'il sera décrit ultérieurement au travers des FIGURES 5 et 6.

La chambre d'équilibrage 700A du premier système d'actionnement 300A est agencée pour recevoir un certain volume de fluide hydraulique permettant de lubrifier le premier dispositif de rappel élastique 800A logé dans ladite chambre d'équilibrage 700A. Le fluide de lubrification est avantageusement acheminé par l'intermédiaire de conduits de circulation fluidiques basse pression traversant axialement le moyeu support 500 et débouchant dans la chambre d'équilibrage 700A au niveau d'une face extérieure dudit moyeu support 500 par un conduit d'alimentation 5003A.

La chambre d'équilibrage 700A du premier système d'actionnement 300A est ainsi avantageusement délimitée :
- radialement vers l'intérieur, par une portion du moyeu support 500 ;
- axialement vers l'arrière AR, par la portée d'extension radiale intérieure 1055 du premier piston 105 ;
- radialement vers l'extérieur, par la portée d'extension axiale intermédiaire 2063 du deuxième porte-disques de sortie 206 ; et
- axialement vers l'avant AV, par la portée d'extension radiale intérieure 2065 du deuxième porte-disques de sortie 206.

On notera aussi que l'étanchéité de la chambre d'équilibrage 700A du premier système d'actionnement 300A est garantie par la présence :
- d'un troisième joint d'étanchéité 403A qui s'étend entre deuxième pièce annulaire 820A du premier dispositif de rappel élastique 800A et une portée cylindrique extérieure 910 d'un réducteur de diamètre 900 logé dans la chambre d'équilibrage 700A et formant un chemisage intérieur de ladite chambre d'équilibrage 700A ; et
- du deuxième joint d'étanchéité 402A situé axialement entre l'extrémité radiale intérieure de la portée d'extension radiale intérieure 1055 du premier piston 105 et le moyeu support 500. Le deuxième joint d'étanchéité 402A est porté par le dispositif de rappel élastique 800A du premier système d'actionnement 300A, tel que décrit notamment au travers de la FIGURE 1 pour un premier mode de réalisation, et tel qu'il sera décrit ultérieurement au travers des FIGURES 5 et 6.

De manière comparable, la chambre de commande 750B du deuxième système d'actionnement 300B est agencée pour recevoir un certain volume de fluide hydraulique sous pression afin de générer l'effort axial E2 sur la portée d'extension radiale intérieure 2055 du deuxième piston 205 et de configurer ainsi le deuxième embrayage 200 dans l'une des configurations décrites précédemment. Le fluide hydraulique pressurisé est avantageusement acheminé par l'intermédiaire de conduits de circulation fluidiques haute pression traversant au moins en partie le moyeu support 500 et débouchant dans la chambre de commande 750B du deuxième système d'actionnement 300B au niveau d'une face extérieure dudit moyeu support 500 par un conduit d'alimentation 5002B.

La chambre de commande 750B du deuxième système d'actionnement 300B est ainsi avantageusement délimitée :
- radialement vers l'intérieur, par une portion du moyeu support 500 ;
- axialement vers l'arrière AR, par la portée d'extension radiale intérieure 2065 du deuxième porte-disques d'entrée 206 ;
- radialement vers l'extérieur, par la zone incurvée 2054 du deuxième piston 205 ; et
- axialement vers l'avant AV, par la portée d'extension radiale 2055 du deuxième piston 205.

On notera aussi que l'étanchéité de la chambre de commande 750B du deuxième système d'actionnement 300B est garantie par la présence :
- d'un premier joint d'étanchéité 401B situé entre la portée d'extension radiale intérieure 2065 du deuxième porte-disques d'entrée 206 et la zone incurvée 2054 du deuxième piston 205 ;
- d'un deuxième joint d'étanchéité 402B situé axialement entre l'extrémité radiale intérieure de la portée d'extension radiale intérieure 2055 du deuxième piston 205 et le moyeu support 500. Le deuxième joint d'étanchéité 402B est avantageusement porté par le dispositif de rappel élastique 800B du deuxième système d'actionnement 300B, tel que décrit notamment au travers de la FIGURE 1 pour un premier mode de réalisation, et tel qu'il sera décrit ultérieurement au travers des FIGURES 5 et 6.

La chambre d'équilibrage 700B du deuxième système d'actionnement 300B est agencée pour recevoir un certain volume de fluide hydraulique permettant de lubrifier le deuxième dispositif de rappel élastique 800B logé dans ladite chambre d'équilibrage 700B. Le fluide de lubrification est avantageusement acheminé par l'intermédiaire de conduits de circulation fluidiques basse pression traversant axialement le moyeu support 500 et débouchant dans la chambre d'équilibrage 700B du deuxième système d'actionnement 300B au niveau d'une face extérieure dudit moyeu support 500 par un conduit d'alimentation non visible sur les FIGURES 2 à 4.

Complémentairement, les conduits de circulation fluidique basse pression comprennent un conduit d'alimentation principal 5001 situé au niveau de l'extrémité axiale avant AV du moyeu support 500. Le conduit d'alimentation principal est d'orientation radiale et permet d'établir une communication fluidique du fluide de lubrification à l'aplomb des embrayages 100, 200 afin d'améliorer leur lubrification durant le fonctionnement du mécanisme à double embrayages 10 conforme à l'invention.

La chambre d'équilibrage 700B du deuxième système d'actionnement 300B est ainsi avantageusement délimitée :
- radialement vers l'intérieur, par une portion du moyeu support 500 ;
- axialement vers l'arrière AR, par la portée d'extension radiale intérieure 2055 du deuxième piston 205 ;
- radialement vers l'extérieur et axialement vers l'avant AV, par la plaque de chemisage 332.

On notera aussi que l'étanchéité de la chambre d'équilibrage 700B du deuxième système d'actionnement 300B est garantie par la présence :
- d'un troisième joint d'étanchéité 403B qui s'étend entre deuxième pièce annulaire 820B du deuxième dispositif de rappel élastique 800B et une portée cylindrique extérieure de la plaque de chemisage 332 ; et
- du deuxième joint d'étanchéité 402B situé axialement entre l'extrémité radiale intérieure de la portée d'extension radiale intérieure 2055 du deuxième piston 205 et le moyeu support 500. Le deuxième joint d'étanchéité 402B est porté par le dispositif de rappel élastique 800B du deuxième système d'actionnement 300B, tel que décrit notamment au travers de la FIGURE 1 pour un premier mode de réalisation, et tel qu'il sera décrit ultérieurement au travers des FIGURES 5 et 6.

On comprendra à ce stade de la description que, sous l'effet du fluide pressurisé remplissant la chambre de commande 750A, 750B de l'un des systèmes d'actionnement 300A, 300B, les premier et deuxième organes de transmission de force 105, 205 sont déplacés axialement vers l'avant AV suivant les efforts axiaux E1, E2 afin de configurer respectivement les premier 100 et deuxième 200 embrayages dans leur configuration embrayée. Complémentairement, sous l'effet des premier et deuxième dispositifs de rappel élastique 800A, 800B logés dans les chambres d'équilibrage 700A, 700B correspondantes, les organes de transmission de force 105, 205 sont repoussés vers l'arrière AR afin de configurer respectivement les premier 100 et deuxième 200 embrayages dans leur configuration débrayée.

Les systèmes d'actionnement 300A, 300B forment ainsi des générateurs d'efforts pour les organes de transmission de force 105, 205 des embrayages 100, 200 correspondants.

En référence aux FIGURES 5 à 6, l'un des dispositifs de rappel élastique 800 monté sur l'un des pistons 105, 205, vu depuis l'une des chambres d'équilibrage 700 du mécanisme d'embrayage 10 conforme à l'invention va maintenant être décrit plus en détails.

Afin de faciliter la compréhension des FIGURES 5 et 6, on fera référence au premier dispositif de rappel élastique 800 monté sur le premier piston 105, mais les caractéristiques techniques décrites-ci-après s'appliquent bien entendu au deuxième dispositif de rappel élastique monté sur le deuxième piston 205.

La seconde pièce annulaire 820A du premier dispositif de rappel élastique 800A est en appui axial contre le premier piston 105. Plus particulièrement, un bord d'élongation radiale 821A de la seconde pièce annulaire 820A est en appui axial contre la portée d'extension radiale intérieure 1055 du premier piston 105. En particulier, la seconde pièce annulaire 820 est - par l'intermédiaire de son bord d'élongation radiale 821A - en appui contre une face de la portée d'extension radiale intérieure 1055 du premier piston 105 orientée axialement en regard de la pluralité d'éléments élastiques 830.

La seconde pièce annulaire 820 est coaxiale d'axe O avec le premier piston 105. La seconde pièce annulaire 820A est formée par le bord d'élongation radiale 821A qui s'étend depuis une extrémité périphérique intérieure 8211A vers une portée intermédiaire 822A oblique qui s'étend axialement dans une direction opposée au premier piston 105, vers l'intérieur de la chambre d'équilibrage. La portée intermédiaire 822A oblique est prolongée radialement vers l'extérieur par une portée d'extension radiale extérieure 823A qui porte au niveau de son extrémité extérieure 8231A un autre joint d'étanchéité 403A, dit troisième joint d'étanchéité 403A.

L'extrémité périphérique intérieure 8211A de la seconde pièce annulaire 820A est coudée et s'étend de manière sensiblement perpendiculaire au bord d'élongation radiale 821A, dans une direction opposée par rapport à l'extrémité radiale supérieure 8231A. de manière plus particulière, l'extrémité périphérique intérieure 8211A forme un coude qui s'étend axialement dans la direction du premier piston 105. Radialement, l'extrémité périphérique intérieure 8211A est située à l'intérieur du premier piston 105, de sorte qu'il existe un jeu radial entre l'extrémité périphérique intérieure 8211A coudée de la seconde pièce annulaire 820A et une extrémité radiale intérieure de la portée d'extension radiale intérieure 1055 du premier piston 105.

La seconde pièce annulaire 820A comprend à son extrémité périphérique intérieure 8211A un joint d'étanchéité 402A dit deuxième joint d'étanchéité 402A. Le deuxième joint d'étanchéité 402A est avantageusement formé par une première garniture 4021A située axialement à l'opposé du premier piston 105 par rapport à la seconde pièce annulaire 820A, et une deuxième garniture 4022A qui est située du côté dudit premier piston 105. Ainsi, le deuxième joint d'étanchéité 402A est fixé solidairement sur la seconde pièce annulaire 820A, et plus particulièrement au niveau de son extrémité périphérique intérieure 8211A, par exemple par emmanchement, par vulcanisation, par surmoulage ou par collage.

De manière avantageuse, la deuxième garniture 4022A du deuxième joint d'étanchéité 402A s'étend sur le bord d'élongation radiale 821A de la seconde pièce annulaire 820A, radialement au-delà de la première garniture 4021A.

Le deuxième joint d'étanchéité 402A comprend aussi une lèvre 4023A qui s'étend simultanément radialement à l'intérieur de l'extrémité périphérique intérieure 8211A de la seconde pièce annulaire 820A et axialement dans une direction opposée à l'extrémité radiale extérieure 8231A par rapport au bord d'élongation radiale 821A de la seconde pièce annulaire 820A.

Radialement, la partie de la deuxième garniture 4022A du deuxième joint d'étanchéité 402A située sur la partie coudée de l'extrémité périphérique intérieure 8211A de la seconde pièce annulaire 820A est située à l'intérieur du premier piston 105, de sorte qu'il existe un jeu radial D entre la deuxième garniture 4022A et l'extrémité radiale intérieure de la portée d'extension radiale intérieure 1055 du premier piston 105.

En revanche, axialement, la partie de la deuxième garniture 4022A du deuxième joint d'étanchéité 402A située sur le bord d'élongation radiale 821A de la seconde pièce annulaire 820A est en appui contre le premier piston 105. Préférentiellement encore, la partie de la deuxième garniture 4022A du deuxième joint d'étanchéité 402A située sur le bord d'élongation radiale 821A de la seconde pièce annulaire 820A est pincée entre la portée d'extension radiale intérieure 1055 du premier piston 105 et le bord d'élongation radiale 821A de la seconde pièce annulaire 820A. Pour ce faire, un espace axial X, pris le long d'une direction axiale, est inférieur ou égal à l'épaisseur de la deuxième garniture 4022A du deuxième joint d'étanchéité 402A. Dans l'exemple illustré sur la FIGURE 6B, l'extrémité radiale intérieure de la portée d'extension radiale intérieure 1055 du premier piston 105 est axialement déformée dans la direction opposée à la seconde pièce annulaire 820A afin de réaliser un tel pincement. Le joint d'étanchéité est ainsi précontraint axialement entre la seconde pièce annulaire et le piston correspondant.

Le pincement de la deuxième garniture 4022A du deuxième joint d'étanchéité 402A entre la portée d'extension radiale intérieure 1055 du premier piston 105 et le bord d'élongation radiale 821A de la seconde pièce annulaire 820A peut être réalisé par tout autre moyen, tel que par exemple par le biais d'un usinage local d'une face de la portée d'extension radiale intérieure 1055 du premier piston 105 située en regard de la seconde pièce annulaire 820A. Alternativement, le pincement peut aussi être réalisé par une déformation locale d'une face du bord d'extension radiale 821A de la seconde pièce annulaire 820A située en regard du premier piston 105, ou encore par usinage.

De manière avantageuse, le premier dispositif de rappel élastique 800A comprend un moyen de centrage 860A collaborant avec un moyen de centrage complémentaire 1050 situé sur le premier piston 105, afin de rendre coaxiaux ledit premier dispositif de rappel élastique 800A avec ledit premier piston 105. Plus particulièrement, le moyen de centrage 860A du premier dispositif de rappel élastique 800A est formé par une ouverture axiale 860A située sur le bord d'élongation radiale 821A, et le moyen de centrage complémentaire 1050 du premier piston 105 est formé par un plot cylindrique d'extension axiale 1050 portée par une face du premier piston 105 située en regard de la seconde pièce annulaire 820A.

Préférentiellement, la seconde pièce annulaire 820A comprend une pluralité d'ouvertures axiales 860A formant collectivement le moyen de centrage, ladite pluralité d'ouvertures axiales 860A étant angulairement régulièrement réparties autour de l'axe longitudinal O. Complémentairement, le premier piston 105 comprend préférentiellement une pluralité de plots cylindriques d'extension axiale 1050, ladite pluralité de plots cylindriques 1050 étant angulairement régulièrement répartis autour de l'axe longitudinal O.

L'ouverture axiale 860A de la seconde pièce annulaire 820A est avantageusement d'un diamètre supérieur ou égal au diamètre du plot cylindrique 1050 du premier piston 105, de manière à ce que ledit plot cylindrique 1050 collabore avec l'ouverture axiale 860A par emmanchement, préférentiellement sans jeu, éventuellement en force.

Le plot cylindrique 1050 peut être réalisé par un usinage spécifique du premier piston 105, ou par emboutissage par exemple.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention selon les revendications annexées peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Mécanisme d'embrayage (10) destiné à être installé entre un moteur et une transmission de véhicule, lequel mécanisme d'embrayage (10) comprend :
- un embrayage (100, 200) en rotation autour d'un axe de rotation (O) ;
- un système d'actionnement (300) agencé pour embrayer ou débrayer l'embrayage (100, 200), ledit système d'actionnement (300) comprenant :
∘ une chambre de commande (750) agencée pour recevoir un fluide pressurisé ;
∘ une chambre d'équilibrage (700) délimitée en partie par un piston (105, 205), le piston (105, 205) étant mobile axialement et délimitant radialement vers l'extérieur la chambre de commande (750) par une portée d'extension axiale (1053, 2053), ledit piston (105, 205) s'étendant radialement à l'extérieur de ladite chambre de commande (750) afin d'embrayer ou de débrayer l'embrayage (100, 200) sous l'effet du fluide pressurisé contenu dans la chambre de commande (750), et délimitée radialement vers l'intérieur par une portion d'un moyeu support (500) du mécanisme d'embrayage ;
∘ un dispositif de rappel élastique (800) destiné à générer un effort à l'encontre d'un piston (105, 205) mis en mouvement par un système d'actionnement (300) d'un embrayage du mécanisme d'embrayage (10), ledit dispositif de rappel élastique (800) comprenant :
- une première pièce annulaire (810) destinée à prendre appui contre une face d'appui du mécanisme d'embrayage (10) ;
- une seconde pièce annulaire (820) destinée à prendre appui contre le piston (105, 205) du mécanisme d'embrayage (10) ;
- une pluralité d'éléments élastiques (830) s'étendant entre la première pièce annulaire (810) et la seconde pièce annulaire (820) ;
la seconde pièce annulaire (820) comprenant à son extrémité périphérique intérieure (8211) un joint d'étanchéité (402), et la seconde pièce annulaire (820) est en appui contre une face du piston (105, 205) orientée axialement en regard de la pluralité d'éléments élastiques (830),
ledit dispositif de rappel élastique (800) étant logé dans la chambre d'équilibrage (700) et s'étendant entre le piston (105, 205) et une face latérale de la chambre d'équilibrage (700),
**caractérisé en ce que** le joint d'étanchéité (402) du dispositif de rappel élastique est simultanément en appui radial contre le moyeu support (500) et en appui axial contre le piston (105, 205).

2. Mécanisme d'embrayage (10) selon la revendication précédente, dans lequel l'extrémité périphérique intérieure (8211) de la seconde pièce annulaire (820) est formée par une partie terminale coudée.

3. Mécanisme d'embrayage (10) selon la revendication précédente dans lequel la partie terminale coudée (8211) de la seconde pièce annulaire (820) s'étend axialement dans une direction opposée par rapport à la première pièce annulaire (810).

4. Mécanisme d'embrayage (10) selon l'une quelconque des revendications précédentes, dans lequel le joint d'étanchéité (402) est emmanché sur l'extrémité périphérique intérieure (8211) de la seconde pièce annulaire (820).

5. Mécanisme d'embrayage (10) selon l'une quelconque des revendications précédentes, dans lequel le joint d'étanchéité (402) s'étend le long d'un bord d'élongation radiale (821) de la seconde pièce annulaire (820).

6. Mécanisme d'embrayage (10) selon la revendication précédente, dans lequel le joint d'étanchéité comprend une première garniture (4021) et une deuxième garniture (4022), la deuxième garniture (4022) s'étendant radialement au-delà de la première garniture (4021) sur la seconde pièce annulaire (820).

7. Mécanisme d'embrayage (10) selon l'une quelconque des revendications précédentes, dans lequel le joint d'étanchéité (402) comprend une lèvre (4023).

8. Mécanisme d'embrayage (10) selon la revendication 2, dans lequel la partie terminale coudée (8211) du dispositif de rappel élastique (800) s'étend selon une direction axiale, ladite partie terminale coudée (8211) étant située radialement entre une extrémité intérieure du piston (105, 205) et un moyeu support du mécanisme d'embrayage (10).

9. Mécanisme d'embrayage (10) selon la revendication 6, dans lequel, au niveau du bord d'élongation radiale (821) de la seconde pièce annulaire (820) du dispositif de rappel élastique (800), la deuxième garniture (4022) du joint d'étanchéité (402) est interposée entre ladite seconde pièce annulaire (820) et le piston (105, 205) du mécanisme d'embrayage (10).

10. Mécanisme d'embrayage (10) selon la revendication précédente, dans lequel un espace axial (X) est formé entre le piston (105, 205) et la seconde pièce annulaire (820) du dispositif de rappel élastique (800), le long de laquelle s'étend la deuxième garniture du joint d'étanchéité, l'espace axial (X), pris le long d'une direction axiale, étant inférieur ou égal à l'épaisseur de la deuxième garniture (4022) du joint d'étanchéité (402).

11. Mécanisme d'embrayage (10) selon l'une quelconque des revendications précédentes, dans lequel le dispositif de rappel élastique (800) comprend un moyen de centrage formé par au moins une ouverture axiale (860) collaborant avec au moins un plot cylindrique complémentaire d'extension axiale (1050) et formé sur une face du piston (105, 205) en regard du dispositif de rappel élastique (800).

12. Mécanisme d'embrayage (10) selon l'une quelconque des revendications précédentes, dans lequel la face latérale de la chambre d'équilibrage (700) contre laquelle le dispositif de rappel élastique (800) est en appui est formée par une face d'un porte-disques d'entrée (106, 206) du mécanisme d'embrayage (10) située en regard du piston (105, 205).

13. Mécanisme d'embrayage (10) selon l'une quelconque des revendications précédentes, lequel mécanisme d'embrayage (10) est du type à double embrayages et comprenant un premier embrayage (100) piloté par un premier système d'actionnement (300A) et un deuxième embrayage (200) piloté par un deuxième système d'actionnement (300B).

## Patentansprüche

1. Kupplungsmechanismus (10), welcher dazu bestimmt ist, zwischen einem Motor und einer Kraftübertragungsvorrichtung eines Fahrzeugs eingebaut zu werden, wobei dieser Kupplungsmechanismus (10) umfasst:
- eine Kupplung (100, 200), die um eine Drehachse (O) drehbar ist;
- ein Betätigungssystem (300), das dazu eingerichtet ist, die Kupplung (100, 200) einzurücken oder auszurücken, wobei das Betätigungssystem (300) umfasst:
∘ eine Steuerkammer (750), die dazu eingerichtet ist, ein unter Druck stehendes Fluid aufzunehmen;
∘ eine Ausgleichskammer (700), die zum Teil von einem Kolben (105, 205) begrenzt wird, wobei der Kolben (105, 205) axial beweglich ist und radial nach außen die Steuerkammer (750) durch eine sich axial erstreckende Lagerfläche (1053, 2053) begrenzt, wobei sich der Kolben (105, 205) radial außerhalb der Steuerkammer (750) erstreckt, um die Kupplung (100, 200) unter der Wirkung des unter Druck stehenden Fluids, das in der Steuerkammer (750) enthalten ist, einzurücken oder auszurücken, und die radial nach innen von einem Abschnitt einer Tragnabe (500) des Kupplungsmechanismus begrenzt wird;
∘ eine elastische Rückholvorrichtung (800), die dazu bestimmt ist, eine Kraft zu erzeugen, die einem Kolben (105, 205) entgegenwirkt, der von einem Betätigungssystem (300) einer Kupplung des Kupplungsmechanismus (10) in Bewegung versetzt wird, wobei die elastische Rückholvorrichtung (800) umfasst:
- ein erstes ringförmiges Teil (810), das dazu bestimmt ist, sich an einer Stützfläche des Kupplungsmechanismus (10) abzustützen;
- ein zweites ringförmiges Teil (820), das dazu bestimmt ist, sich am Kolben (105, 205) des Kupplungsmechanismus (10) abzustützen;
- mehrere elastische Elemente (830), die sich zwischen dem ersten ringförmigen Teil (810) und dem zweiten ringförmigen Teil (820) erstrecken;
wobei das zweite ringförmige Teil (820) an seinem inneren Umfangsende (8211) eine Dichtung (402) umfasst und das zweite ringförmige Teil (820) an einer Fläche des Kolbens (105, 205) anliegt, die den mehreren elastischen Elementen (830) axial gegenüberliegend ausgerichtet ist, wobei die elastische Rückholvorrichtung (800) in der Ausgleichskammer (700) untergebracht ist und sich zwischen dem Kolben (105, 205) und einer Seitenfläche der Ausgleichskammer (700) erstreckt,
**dadurch gekennzeichnet, dass** die Dichtung (402) der elastischen Rückholvorrichtung gleichzeitig radial an der Tragnabe (500) anliegt und axial am Kolben (105, 205) anliegt.

2. Kupplungsmechanismus (10) nach dem vorhergehenden Anspruch, wobei das innere Umfangsende (8211) des zweiten ringförmigen Teils (820) von einem abgewinkelten Endabschnitt gebildet wird.

3. Kupplungsmechanismus (10) nach dem vorhergehenden Anspruch, wobei sich der abgewinkelte Endabschnitt (8211) des zweiten ringförmigen Teils (820) axial in einer in Bezug auf das erste ringförmige Teil (810) entgegengesetzten Richtung erstreckt.

4. Kupplungsmechanismus (10) nach einem der vorhergehenden Ansprüche, wobei die Dichtung (402) auf das innere Umfangsende (8211) des zweiten ringförmigen Teils (820) aufgesteckt ist.

5. Kupplungsmechanismus (10) nach einem der vorhergehenden Ansprüche, wobei sich die Dichtung (402) entlang eines eine radiale Verlängerung bildenden Randes (821) des zweiten ringförmigen Teils (820) erstreckt.

6. Kupplungsmechanismus (10) nach dem vorhergehenden Anspruch, wobei die Dichtung einen ersten Dichtungsabschnitt (4021) und einen zweiten Dichtungsabschnitt (4022) umfasst, wobei sich der zweite Dichtungsabschnitt (4022) radial jenseits des ersten Dichtungsabschnitts (4021) auf dem zweiten ringförmigen Teil (820) erstreckt.

7. Kupplungsmechanismus (10) nach einem der vorhergehenden Ansprüche, wobei die Dichtung (402) eine Lippe (4023) umfasst.

8. Kupplungsmechanismus (10) nach Anspruch 2, wobei sich der abgewinkelte Endabschnitt (8211) der elastischen Rückholvorrichtung (800) in einer axialen Richtung erstreckt, wobei sich der abgewinkelte Endabschnitt (8211) radial zwischen einem inneren Ende des Kolbens (105, 205) und einer Tragnabe des Kupplungsmechanismus (10) befindet.

9. Kupplungsmechanismus (10) nach Anspruch 6, wobei an dem eine radiale Verlängerung bildenden Rand (821) des zweiten ringförmigen Teils (820) der elastischen Rückholvorrichtung (800) der zweite Dichtungsabschnitt (4022) der Dichtung (402) zwischen dem zweiten ringförmigen Teil (820) und dem Kolben (105, 205) des Kupplungsmechanismus (10) angeordnet ist.

10. Kupplungsmechanismus (10) nach dem vorhergehenden Anspruch, wobei ein axialer Zwischenraum (X) zwischen dem Kolben (105, 205) und dem zweiten ringförmigen Teil (820) der elastischen Rückholvorrichtung (800) ausgebildet ist, entlang dessen sich der zweite Dichtungsabschnitt der Dichtung erstreckt, wobei der axiale Zwischenraum (X), entlang einer axialen Richtung betrachtet, kleiner oder gleich der Dicke des zweiten Dichtungsabschnitts (4022) der Dichtung (402) ist.

11. Kupplungsmechanismus (10) nach einem der vorhergehenden Ansprüche, wobei die elastische Rückholvorrichtung (800) ein Zentriermittel umfasst, das von wenigstens einer axialen Öffnung (860) gebildet wird, die mit wenigstens einem komplementären zylindrischen Zapfen (1050) zusammenwirkt, der sich axial erstreckt und auf einer Fläche des Kolbens (105, 205) ausgebildet ist, die der elastischen Rückholvorrichtung (800) gegenüberliegt.

12. Kupplungsmechanismus (10) nach einem der vorhergehenden Ansprüche, wobei die Seitenfläche der Ausgleichskammer (700), an welcher die elastische Rückholvorrichtung (800) anliegt, von einer Fläche eines Eingangslamellenträgers (106, 206) des Kupplungsmechanismus (10) gebildet wird, die sich gegenüber dem Kolben (105, 205) befindet.

13. Kupplungsmechanismus (10) nach einem der vorhergehenden Ansprüche, wobei der Kupplungsmechanismus (10) vom Typ mit Doppelkupplung ist und eine erste Kupplung (100), die von einem ersten Betätigungssystem (300A) gesteuert wird, und eine zweite Kupplung (200), die von einem zweiten Betätigungssystem (300B) gesteuert wird, umfasst.

## Claims

1. Clutch mechanism (10) designed to be installed between a motor and a transmission of a vehicle, said clutch mechanism (10) comprising:
- a clutch (100, 200) in rotation about an axis of rotation (O);
- a actuating system (300) designed to engage or disengage the clutch (100, 200), said actuating system (300) comprising:
∘ a control chamber (750) designed to receive a pressurized fluid;
∘ a balancing chamber (700) bounded in part by a piston (105, 205), the piston (105, 205) being axially movable and radially bounding the control chamber (750) toward the outside by an axial extension span (1053, 2053), said piston (105, 205) extending radially to the outside from said control chamber (750) in order to engage or disengage the clutch (100, 200) under the effect of the pressurized fluid contained in the control chamber (750); and bounded radially toward the inside by a portion of the support hub (500) of the clutch mechanism;
∘ an elastic return device (800) designed to generate a force opposing a piston (105, 205) placed in movement by an actuating system (300) of a clutch of the clutch mechanism (10), said elastic return device (800) comprising:
- a first annular piece (810) designed to bear against a support face of the clutch mechanism (10);
- a second annular piece (820) designed to bear against the piston (105, 205) of the clutch mechanism (10);
- a plurality of elastic elements (830) extending between the first annular piece (810) and the second annular piece (820);
the second annular piece (820) comprises at its internal peripheral end (8211) a gasket (402), and the second annular piece (820) bears against a face of the piston (105, 205) oriented axially opposite the plurality of elastic elements (830),
said elastic return device (800) being housed in the balancing chamber (700) and extending between the piston (105, 205) and a lateral face of the balancing chamber (700),
**characterised in that** the gasket (402) of the elastic return device is simultaneously bearing radially against the support hub (500) and bearing axially against the piston (105, 205).

2. Clutch mechanism (10) according to the preceding claim, wherein the internal peripheral end (8211) of the second annular piece (820) is formed by an angled end portion.

3. Clutch mechanism (10) according to the preceding claim, wherein the angled end portion (8211) of the second annular piece (820) extends axially in a direction opposite that of the first annular piece (810) .

4. Clutch mechanism (10) according to any one of the preceding claims, wherein the gasket (402) is fitted onto the internal peripheral end (8211) of the second annular piece (820).

5. Clutch mechanism (10) according to any one of the preceding claims, wherein the gasket (402) extends along a radial elongation edge (821) of the second annular piece (820).

6. Clutch mechanism (10) according to the preceding claim, wherein the gasket comprises a first seal (4021) and a second seal (4022), the second seal (4022) extending radially beyond the first seal (4021) on the second annular piece (820).

7. Clutch mechanism (10) according to any one of the preceding claims, wherein the gasket (402) has a lip (4023).

8. Clutch mechanism (10) according to the claim 2, wherein the angled end portion (8211) of the elastic return device (800) extends in an axial direction, said angled end portion (8211) being situated radially between an internal end of the piston (105, 205) and a support hub of the clutch mechanism (10).

9. Clutch mechanism (10) according to the claim 6, wherein, in the area of the radial elongation edge (821) of the second annular piece (820) of the elastic return device (800), the second seal (4022) of the gasket (402) is interposed between said second annular piece (820) and the piston (105, 205) of the clutch mechanism (10).

10. Clutch mechanism (10) according to the preceding claim, wherein an axial space (X) is formed between the piston (105, 205) and the second annular piece (820) of the elastic return device (800), along which piece the second seal of the gasket extends, the axial space (X), taken along an axial direction, being less than or equal to the thickness of the second seal (4022) of the gasket (402).

11. Clutch mechanism (10) according any one of the preceding claims, wherein the elastic return device (800) comprises a centring means formed by at least one axial opening (860) cooperating with at least one complementary cylindrical span of axial extension (1050) and formed on a face of the piston (105, 205) opposite the elastic return device (800).

12. Clutch mechanism (10) according to any one of the preceding claims, wherein the lateral face of the balancing chamber (700) against which the elastic return device (800) bears is formed by a face of an entrance disc holder (106, 206) of the clutch mechanism (10) situated opposite the piston (105, 205) .

13. Clutch mechanism (10) according to any one of the preceding claims, which clutch mechanism (10) is of the dual clutch type comprising a first clutch (100) driven by a first actuating system (300A) and a second clutch (200) driven by a second actuating system (300B).
